# EUROPEAN PATENT SPECIFICATION

(11) **EP 1 959 814 B1**
(45) Date of publication and mention of the grant of the patent: **23.01.2013**
(21) Application number: 06830383.3
(22) Date of filing: 05.12.2006
(51) Int. Cl.: A47L 15/42

(54) **A DISHWASHER**
GESCHIRRSPÜLMASCHINE
LAVE-VAISSELLE

(30) Priority: 15.12.2005 TR 200504874
(43) Date of publication of application: 27.08.2008
(73) Proprietor: Arçelik Anonim Sirketi, 34950 Istanbul (TR)
(72) Inventor: KIBAR, Tansel, 34950 Istanbul (TR); AKIN, Tolga, 34950 Istanbul (TR); UZ, Atilla, 34950 Istanbul (TR); ARSLANTAS, Salih, 34950 Istanbul (TR)
(86) International application number: PCT/EP2006/069337
(87) International publication number: WO 2007/068634

(56) References cited:
- EP-A- 0 541 849
- WO-A-99/45188
- DE-U1- 8 500 663
- FR-A- 2 605 511
- GB-A- 963 875
- US-A1- 2005 017 609

## Description

The present invention relates to a dishwasher comprising a washing tank composed by joining together a plastic base and a metal body.

The washing tanks of dishwashers are usually produced as a single piece from metal or plastic material.

However, in state of the art, there are also dishwashers comprising washing tanks composed of a plastic or plastic derivative base which can be easily processed and is cheaper, and a body produced of metal that are joined together. Producing the base of plastics provides easier shaping of the base. Producing the body of metal is preferred in view of giving the user an impression of hygiene.

Composing the washing tank being of two separate pieces, being plastic and metal, creates various problems in joining these two parts together.

In the state-of-the-art European Patent no. EP0452287, a dishwasher comprising a washing tank composed of two parts is described. The plastic base and the metal body forming the washing tank are joined together by screw joints.

In this embodiment where the base and the body are joined together by screws, screwing is performed with certain spacing in between, moreover the forces applied on each screw can be different. This results in not being able to join the base and the body, so as to provide sealing.

In the state-of-the-art United States Patent Application no. US2005/0017609, the washing tank of a dishwasher is composed of two pieces, a base and a body. In the said application, the use of a plastic material having an adhesive feature in joining these two pieces is explained.

The object of the present invention is the realization of a dishwasher comprising a washing tank produced such that the plastic base and the metal body are joined in a non-detachable and leak-proof manner.

The dishwasher realized in order to fulfill the objectives of the present invention, explicated in the first claim and other dependent claims, comprises a washing tank composed by joining together a plastic base and a metal body.

The dishwasher comprises a body having a projection formed by bending its side in preferably a "U" shape, a base having a housing into which the projection is seated and a locking element that partially blocks the opening of this housing.

In another embodiment of the present invention, movement of the body in the upward direction is restrained by a locking element, which, is fastened to the housing that the projection enters via various methods, extends towards the opening of the housing such that it partially blocks the opening and is produced separately from the housing. In this embodiment, different from the point contact present in the joining with screw, the housing and the projection contacts each other along a larger surface and thus the joining of the base and the body together so as to provide better sealing is provided.

In an embodiment of the present invention, the locking element can be produced of a material different from the material used in producing the base.

In another embodiment of the present invention, the projection is formed by bending in an "S" or "zigzag" shape. An effective leak-proofing is maintained by the side being bended in this shape, by means of contacting the side walls of the housing along more than one line.

In another embodiment of the present invention both ends of the locking element is bent so as to face each other. One of the bent ends of the locking element is fixed to the base, whereas the other end extends towards the opening of the housing and thus the locking element is attached to the base.

In another embodiment of the present invention, the dishwasher comprises a housing formed on the base such that its opening faces downward. The projection inserted into the housing partially supports the base. The screw shaped locking element, fixed to the base such that the opening of the housing is partially blocked after the projection is seated in the housing, prevents the detachment of the projection from the housing.

By way of the present invention, the water in the washing tank composed by joining two pieces together is prevented from leaking out of the joint region wherein the base and the body are clamped together.

The dishwashers realized in order to fulfill the objectives of the present invention is illustrated in the attached figures, where:

Figure 1 - is the schematic view of a dishwasher.

Figure 2 -is the partial sectional view of the locking element, the base and the body joined together in an embodiment of the present invention.

Figure 3 - is the partial sectional view of the locking element in an embodiment of the present invention.

Figure 4 - is the partial sectional view of the locking element, the base and the body joined together in another embodiment of the present invention.

Figure 5 - is the partial sectional view of the locking element in another embodiment of the present invention.

Figure 6 - is the partial perspective view of the side of the base in yet another embodiment of the present invention.

Figure 7 - is the partial sectional view of the locking element in yet another embodiment of the present invention.

Figure 8 - is the partial sectional view of the locking element, the base and the body joined together in another embodiment of the present invention.

Figure 9 - is the partial perspective view of a body comprising a "zigzag" shaped projection.

Figure 10 - is the partial sectional view of the locking element, the base and the body joined together in yet another embodiment of the present invention.

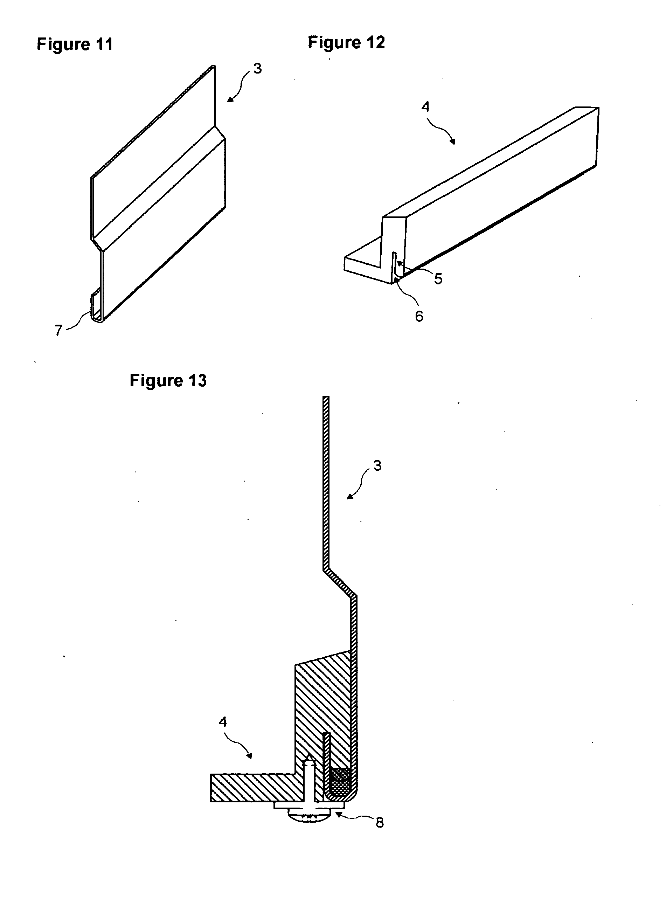

Figure 11 - is the partial perspective view of the side of a body in another embodiment of the present invention.

Figure 12 - is the partial perspective view of the side of the base in another embodiment of the present invention.

Figure 13 - is the partial sectional view of the locking element, the base and the body joined together in yet another embodiment of the present invention.

The elements shown in figures are numbered as follows:
- 1.: Dishwasher
- 2.: Washing tank
- 3.: Body
- 4.: Base
- 5.: Housing
- 6.: Opening
- 7.: Projection
- 8.: Locking element
- 9.: Protrusion
- 10.: Pin
- 11.: Hole
- 12.: Cut-out
- 13.: Leak-proofing element

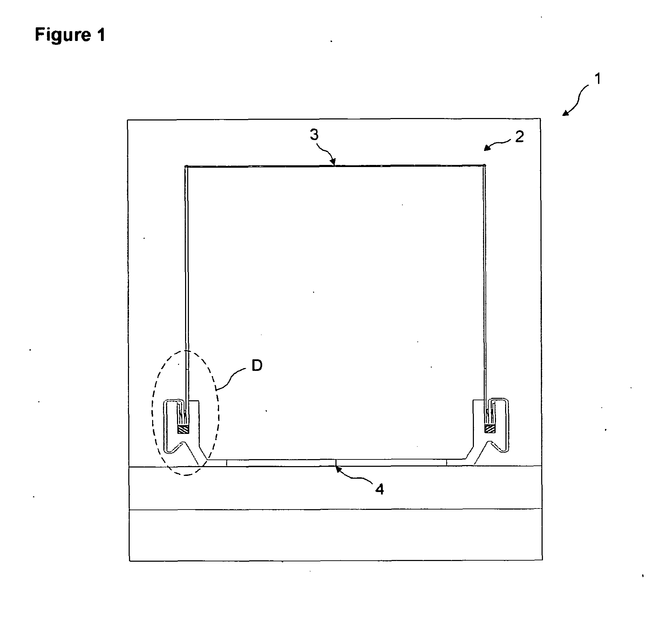

The dishwasher (1) of the present invention comprises washing tank (2) having a body (3), produced of metal, shaped like a box with the front and the bottom open, and having a base (4) produced of polymer material, e.g. plastic, joined together with the body (3) by emplacing under the body (3) (Figure 1).

The body (3) comprises a projection (7) formed by bending its side seated on the base (4).

The base (4) comprises a housing (5) into which the projection (7) is fitted and an opening (6) through which the projection (7) is fitted into the housing (5).

The dishwasher (1) comprises a locking element (8), produced separately from the base (4) and the body (3), one side of which is fixed to the base (4) and the other side extends from outside towards the inside of the housing (5) so as to block it's opening (6) partially" preventing the detachment of the projection (7) from the housing (5) by exerting force on the projection (7) and providing the body (3) and the base (4) to be clamped to each other.

The dishwasher (1) comprises one or more leak-proofing elements (13) situated between the projection (7) and the housing (5) wherein the projection (7) is seated.

When the body (3) is desired to be joined with the base (4), the projection (6) is inserted into the housing (5) such that the leak-proofing element (13) is preferably disposed between itself and the housing (5). The entire surface of the projection (7) bears on the side walls of the housing (5). In this embodiment, after the projection (7) is disposed in the housing (5) the locking element (8) is fixed to the base (4) so as to block the opening (6) of the housing (5) partially. When a force is exerted on the body (3), the projection (7) bears on the locking element (8). Accordingly, the detachment of the projection (7) from the housing (5) it's disposed in and hence the detachment of the body (3) from the base (4) is prevented.

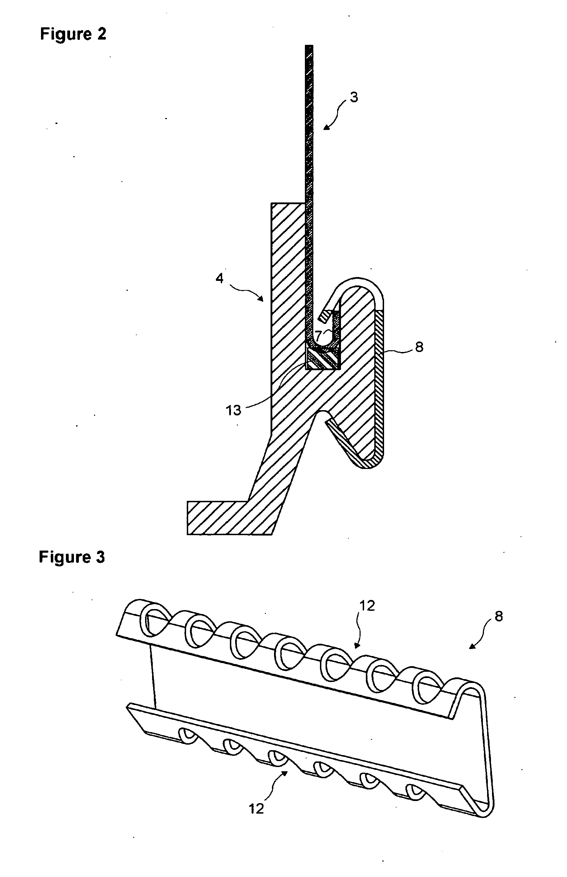

In another embodiment of the present invention, the sides of the locking element (8) are being shaped via various shaping processes - cutting, twisting, bending, piercing and etc. - in such a way that not only it extends towards the housing (5) but also to ease its attachment to the base (4). In this embodiment the locking element (8) is preferably bent such that its two opposite sides faces each other. Thus the locking element (8) is mounted on the base (4) via various fastening methods after it is twisted or bent such that one of its ends extends towards the housing (5) and exerts a force on the projection (7) and the other end eases the mounting (Figure 2, Figure 3, Figure 4 and Figure 5).

In another embodiment of the present invention, the sides of the locking element (8) is shaped so that the locking element (8) is in "C", "U" or "L" form.

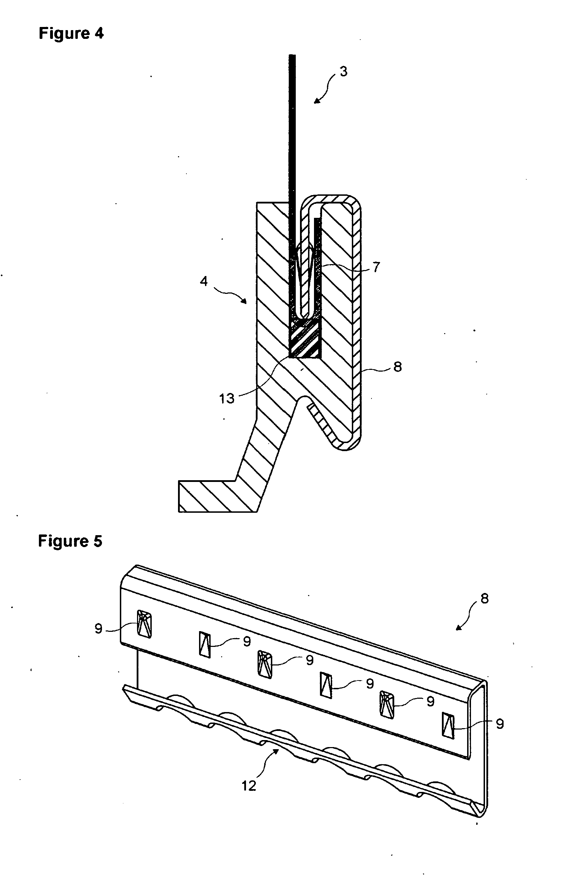

In yet another embodiment of the present invention, the locking element (8) comprises protrusions (9) of various shapes and numbers on it, extending up to the bending point of the projection (7) fitted in the housing (5) and exerts force on this point. The locking element (8) is mounted on the base (4) such that it exerts force on the projection (7) that is fitted in the housing (5). When the locking element (8) is mounted on the base (4) like this, the locking element (8) bears on the bending point of the projection (7) in the housing (5) and the protrusions (9) provide the projection (7) to be squeezed in between the side walls of the housing (5). In this embodiment, by the locking element (8) extending up to and bearing on the bending point of the projection (7), the body (3) is prevented from moving in the vertical direction, and by means of the protrusions (9) the body is prevented from moving in the horizontal direction, providing the base (4) and the body (3) to be entirely clamped to each other (Figure 4 and Figure 5).

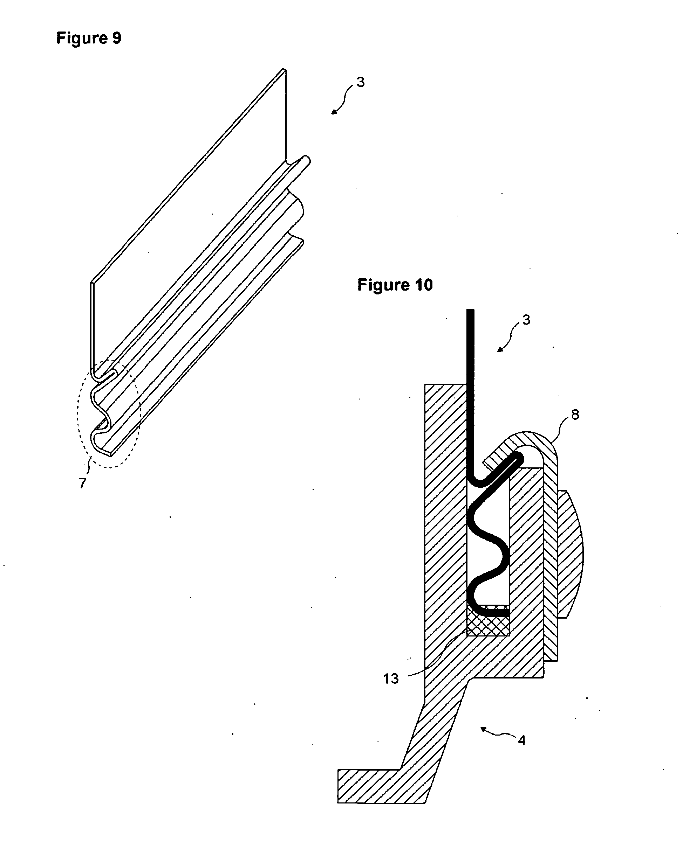

In another embodiment of the present invention, the projection (7) inserted into the housing (5) is formed by bending more than once in "zigzag" or "S" shape such that it exerts force at least from two points to both of the side walls of the housing (5). The width of the projection (7) almost equals to the width of the housing (5). The bending points exert force on the side walls of the housing (5) by contacting the side walls at intervals, providing the squeezing of the projection (7) in the housing (5) and the clamping of the base and the body (4 and 3) to each other in a leak-proof manner. In this embodiment of the present invention, the locking element (8) exerts force on the part of the projection (7) closest to the opening (6) of the housing (5) (Figure 9 and Figure 10).

In another embodiment of the present invention, in order to form the portion of the locking piece (8) extending towards the opening (6) of the housing (5) more easily, cut outs (12) are provided at certain intervals on its bended portions.

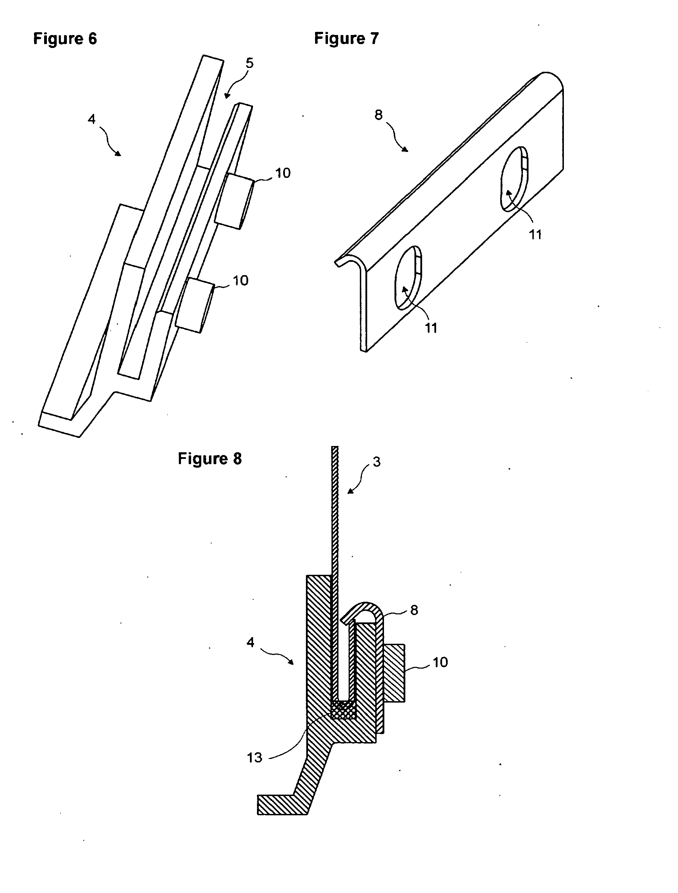

In another embodiment of the present invention, the base (4) comprises one or more pins (10) that provide fixing of the locking element (8) to the base (4) (Figure 6). In this embodiment, the locking element (8) comprises one or more holes (11) into which the pins (10) are fitted (Figure 7). The locking element (8) is mounted on the base (4) such that the pins (10) are inserted in the holes (11) and the locking element (8) is squeezed in between the base (4) and the pin (10) by implementing various methods (applying heat, pressure etc.) providing it to be fixed on the base (4) (Figure 8).

In another embodiment of the present invention the housing (5) is positioned on the base (4) such that its orifice (6) faces downward. Accordingly, the preferably "U" shaped projection (7) enters into the housing (5) and the base (4) is partially supported by this projection (7). A locking element (8), fixed to the base (4) such that the orifice (6) of the housing (5) is partially covered after the projection (7) is fitted in the housing (5), prevents the detachment of the projection (7) from the housing (5). In this embodiment, a screw is used as the locking element (8). However, the fixing in this embodiment can also be done at the point where the base (4) and the body (3) contact each other (Figure 4, Figure 5 and Figure 6).

By the present invention, the body (3) is provided to clamp with the base (4) in a leak-proof manner.

## Claims

1. A dishwasher (1) comprising a washing tank (2) composed of a body (3), produced of metal, shaped like a box with the front and the bottom open, having a projection (7) formed by bending its side, and a base (4) produced of polymer material, having a housing (5), inside which the projection (7) is fitted and an opening (6) through which the projection (7) is emplaced in the housing (5) and **characterized by** a locking element (8) produced separately from the base (4) and the body (3), one side of the locking element (8) is fixed to the base (4) and the other side extends into the housing (5), partially blocking the opening (6), preventing the detachment of the projection (7) from the housing (5) by exerting force on the projection (7) emplaced in the housing (5) and providing the body (3) to be clamped to the base (4).

2. A dishwasher (1) as in Claim 1, **characterized by** a body (3) comprising a projection (7), extending into the housing (5), formed by bending more than once in "zigzag" or "S" shape such that it exerts force from at least two points to both sides of the housing (5).

3. A dishwasher (1) as in Claim 1, **characterized by** a locking element (8) whose sides are shaped via various shaping processes, not only to extend towards the inside of the housing (5) but also to ease its mounting to the base (4).

4. A dishwasher (1) as in Claim 3, **characterized by** a locking element (8) that is mounted on the base (4) after it is bent such that its two opposite sides faces each other, one of its ends extends towards the inside of the housing (5) and the other end eases its mounting on the base (4).

5. A dishwasher (1) as in Claim 1, **characterized by** a locking element (8) that comprises cut outs (12) that are provided at certain intervals on its bended portions in order to form the portion of the locking piece (8) extending towards the opening (6) of the housing (5) more easily.

6. A dishwasher (1) as in any one of the above claims, **characterized by** a base (4) having a housing (5) on it, which is positioned such that its opening (6) faces downwards.

7. A dishwasher (1) as in Claim 1, **characterized by** a locking element (8) having protrusions (9) on it, of various shapes and numbers, that extends up to the bending point of the projection (7) fitted in the housing (5), exerting force on this point.

8. A dishwasher (1) as in any one of the above claim, **characterized by** a base (4) having one or more pins (10) providing to fix the locking element (8) and a locking element (8) having one or more holes (11) into which the pins (10) are inserted.

## Patentansprüche

1. Geschirrspüler (1), umfassend einen Spültank (2), der aus einem Gehäusekörper (3) aus Metall, der die Form eines vorne und unten geöffneten Kastens aufweist und an dem ein Vorsprung (7) ausgebildet ist, der durch Biegen seiner Seite ausgebildet ist, und einer Basis (4) aus Polymermaterial aufgebaut ist, die ein Gehäuse (5), in das der Vorsprung (7) eingesetzt ist, und eine Öffnung (6) aufweist, durch die der Vorsprung (7) in das Gehäuse (5) gebracht wird, **und gekennzeichnet durch** ein Verriegelungselement (8), das separat von der Basis (4) und dem Gehäusekörper (3) hergestellt ist, wobei eine Seite des Verriegelungselements (8) an der Basis (4) befestigt ist und die andere Seite sich in das Gehäuse (5) erstreckt und die Öffnung (6) teilweise blockiert und so das Lösen des Vorsprungs (7) aus dem Gehäuse (5) verhindert, indem Kraft auf den Vorsprung (7) ausgeübt wird, der in das Gehäuse (5) eingebracht ist, und das dafür sorgt, dass der Gehäusekörper (3) an der Basis (4) festgeklemmt ist.

2. Geschirrspüler (1) nach Anspruch 1, **dadurch gekennzeichnet, dass** ein Gehäusekörper (3) einen Vorsprung (7) umfasst, der sich in das Gehäuse (5) erstreckt und derart geformt ist, dass er mehr als einmal in Zickzack- oder S-Form gebogen ist, derart, dass er von wenigstens zwei Stellen Kraft auf die beiden Seiten des Gehäuses (5) ausübt.

3. Geschirrspüler (1) nach Anspruch 1, **gekennzeichnet durch** ein Verriegelungselement (8), dessen Seiten **durch** verschiedene Formungsverfahren geformt sind, derart, dass es sich nicht nur zum Inneren des Gehäuses (5) hin erstreckt, sondern auch die Montage an der Basis (4) erleichtert.

4. Geschirrspüler (1) nach Anspruch 3, **gekennzeichnet durch** ein Verriegelungselement (8), das an der Basis (4) montiert wird, nachdem es derart gebogen wurde, dass seine zwei gegenüberliegenden Seiten einander zugewandt sind, wobei eines seiner Enden sich zum Inneren des Gehäuses (5) hin erstreckt und das andere Ende das Montieren an der Basis (4) erleichtert.

5. Geschirrspüler (1) nach Anspruch 1, **gekennzeichnet durch** ein Verriegelungselement (8), das Aussparungen (12) umfasst, die in bestimmten Abständen an seinen gebogenen Abschnitten vorgesehen sind, damit der Abschnitt des Verriegelungselements (8), der sich zur Öffnung (6) des Gehäuses (5) hin erstreckt, leichter geformt werden kann.

6. Geschirrspüler (1) nach einem der vorangehenden Ansprüche, **gekennzeichnet durch** eine Basis (4), auf der ein Gehäuse (5) angeordnet ist, das derart positioniert ist, dass seine Öffnung (6) nach unten gewandt ist.

7. Geschirrspüler (1) nach Anspruch 1, **gekennzeichnet durch** ein Verriegelungselement (8), an dem Vorsprünge (9) in unterschiedlicher Form und Anzahl ausgebildet sind, und das sich bis zum Biegepunkt des Vorsprungs (7) aufwärts erstreckt, der in das Gehäuse (5) eingesetzt ist, und Kraft auf diesen Punkt ausübt.

8. Geschirrspüler (1) nach einem der vorangehenden Ansprüche, **gekennzeichnet durch** eine Basis (4) mit einem oder mehreren Stiften (10), die dazu dienen, das Verriegelungselement (8) befestigt wird, und ein Verriegelungselement (8) mit einer oder mehreren Öffnung (11), in die die Stifte (10) eingeführt sind.

## Revendications

1. Un lave-vaisselle (1) comprenant une cuve de lavage (2) composée d'un corps (3), produit en métal, en forme d'une boîte avec le front et le fond ouverts, ayant une projection (7) formée en pliant son côté, et une base (4) produite d'un matériau polymère, ayant un logement (5) dans lequel la projection (7) est placée et une ouverture (6) à travers laquelle la projection (7) est placée dans le logement (5) **et caractérisé par** un élément de blocage (8) produit séparément de la base (4) et du corps (3), où un côté de l'élément de blocage (8) est fixé à la base (4) et l'autre côté s'étend dans le logement (5), partiellement bloquant l'ouverture (6), empêchant la projection (7) de se détacher du logement (5) en exerçant une force sur la projection (7) placée dans le logement (5) et permettant au corps (3) d'être attaché à la base (4).

2. Un lave-vaisselle (1) selon la Revendication 1, **caractérisé par** un corps (3) comprenant une projection (7) s'étendant dans le logement (5) et formée en étant pliée plus d'une fois en "zigzag" ou "S" de telle sorte qu'elle exerce une force d'au moins deux points de part et d'autre du logement (5).

3. Un lave-vaisselle (1) selon la Revendication 1, **caractérisé par** un élément de blocage (8) dont les côtés sont formés par différents procédés, afin de non seulement lui permettre de s'étendre dans le logement (5), mais aussi afin de faciliter son montage à la base (4).

4. Un lave-vaisselle (1) selon la Revendication 3, **caractérisé par** un élément de blocage (8) qui est monté sur la base (4) après qu'il est plié de telle sorte que ses deux côtés opposés font face l'un à l'autre, l'un de ses extrémités s'étend vers l'intérieur du logement (5) et l'autre extrémité facilite son montage sur la base (4).

5. Un lave-vaisselle (1) selon la Revendication 1, **caractérisé par** un élément de blocage (8) qui comprend des découpes (12) qui sont disposées à certains intervalles sur ses parties pliées afin de former la partie de la pièce de blocage (8) s'étendant vers l'ouverture (6) du logement (5) plus facilement.

6. Un lave-vaisselle (1) selon l'une quelconque des revendications précédentes, **caractérisé par** une base (4) ayant un logement (5) sur celle-ci, qui est positionné de telle sorte que son ouverture (6) fait face au bas.

7. Un lave-vaisselle (1) selon la Revendication 1, **caractérisé par** un élément de blocage (8) ayant sur celui-ci des protubérances (9) en formes et nombres différents, qui s'étend jusqu'à le point de pliage de la projection (7) placée dans le logement (5), en exerçant une force sur ce point.

8. Un lave-vaisselle (1) selon l'une quelconque des revendications précédentes, **caractérisé par** une base (4) ayant une ou plusieurs goupilles (10) permettant la fixation de l'élément de blocage (8) et un élément de blocage (8) ayant un ou plusieurs trous (11) dans lesquels les goupilles (10) sont insérées.
